# EUROPEAN PATENT APPLICATION

(11) **EP 2 400 800 A2**
(43) Date of publication of application: **28.12.2011**
(21) Application number: 11171306.1
(22) Date of filing: 24.06.2011
(51) Int. Cl.: H04W 52/02, H04W 76/02, H04W 88/08

(54) **Network apparatus**

(30) Priority: 25.06.2010 JP 2010145176; 21.09.2010 JP 2010211206
(71) Applicant: NTT DoCoMo, Inc., Tokyo 100-6150 (JP)
(72) Inventor: Tooyama, Hiroto, Tokyo, 100-6150 (JP); Morihiro, Yoshifumi, Tokyo, 100-6150 (JP); Sawamukai, Shinsuke, Tokyo, 100-6150 (JP); Shimada, Naoto, Tokyo, 100-6150 (JP); Umeda, Narumi, Tokyo, 100-6150 (JP)
(74) Representative: HOFFMANN EITLE

(57) **Abstract**

A network apparatus having a plurality of call control cards, comprising a selection unit configured to select at least one call control card from among the plurality of call control cards, when the number of connected calls controlled by the whole of the plurality of call control cards is less than a first threshold value; and a power saving control unit configured to cause the call control card selected by the selection unit to shift to a cutoff ready state in which allocation of a new call is restricted.

## Description

### CROSS REFERENCE TO RELATED APPLICATIONS

This application is based upon and claim the benefit of priority from prior Japanese Patent Application No. 2010-145176, filed on June 25, 2010; and prior Japanese Patent Application No. 2010-21.206, filed on September 21, 2010; the entire contents of which are incorporated herein by reference.

### BACKGROUND OF THE INVENTION

### 1. Field of the Invention

The present invention relates to a network apparatus having plural call control cards.

### 2. Description of the Related Art

Heretofore, a mobile communication system having a network apparatus that performs call control has been known. The network apparatus is, for example, a radio base station (MME. eNodeB, or the like) provided in a first communication system (a first RAT (Radio Access Technology)) such as LTE. Alternatively, the network apparatus) is, for example, a radio controller (RNC) provided in a second communication system (a second RAT) such as 3G.

Here, the network apparatus has plural call control cards that perform the call control. Each of the plural call control cards controls calls set for plural mobile communication terminals. For example, the call control cards are the cards that command the mobile communication terminals to perform call processing, the cards that terminate connect signals of the calls set for the mobile communication terminals, and the like (see, for example, Japanese Patent Application Publication No. 2002-27109),

Incidentally, a redundant configuration of the call control cards may be adopted in order to suppress disconnection of connected calls resulting from failures or the like. For example, the call control cards include active call control cards actually used, and standby call control cards used as an alternative to the active call control cards,

Incidentally, power savings have recently been desired throughout the overall mobile communication system because of consideration for the environment or the like. For example, the above described technology involves controlling cooling power of a cooling fan that cools the call control cards, according to heat load level of the call control cards, thereby achieving low power consumption for the cooling fan.

However, the above-described technology has not sufficiently achieved low power consumption for the call control cards.

### SUMMARY OF THE INVENTION

A network apparatus of a first aspect having a plurality of call control cards, comprising a selection unit configured to select at least one call control card from among the plurality of call control cards, when the number of connected calls controlled by the whole of the plurality of call control cards is less than a first threshold value; and a power saving control unit configured to cause the call control card selected by the selection unit to shift to a cutoff ready state in which allocation of a new call is restricted.

In the first aspect, the power saving control unit cuts off power supplied to the call control card in the cutoff ready state, when the number off connected calls controlled by the call control card in the cutoff ready state is less than a second threshold value, or when elapsed time from the shift to the cutoff ready state exceeds a predetermined time.

In the first aspect, the plurality of call control cards include an active call control card and a standby call control card used as an alternative to the active call control card The power saving control unit cuts off power supplied to the standby call control card, when the number of connected calls controlled by the whole of the plurality of call control cards is less than a third threshold value.

In the first aspect, the plurality of call control cards include a plurality of card sets. Each of the plurality of card sets includes an active call control card, and a standby call control card used as an alternative to the active call control card. The power saving control unit cuts off power supplied to both the active call control card and the standby call control card contained in a card set, in which the number of connected calls is less than a fourth threshold value, of the plurality of card sets.

In the first aspect, the network apparatus, further comprising an allocation unit configured to allocate a new call to any one of the plurality of call control cards. The allocation unit allocates the new call so as to provide uneven allocation to the call control card to which the new call is to be allocated.

In the first aspect, the selection unit selects the call control card controlling small number of connected, calls from among the plurality of call control cards.

In the first aspect, the network apparatus, further comprising a data migration unit configured to migrate user data stored in the call control card in the cutoff ready state, to the call control card not shifted shifted to the cutoff ready state.

In the first aspect, the network apparatus, further comprising a command unit configured to provide a command to reduce transmission power of a signal transmitted from a cell relevant to the call control card in the cutoff ready state.

In the first aspect, the selection unit selects the call control card to be shifted to the cutoff ready state, based on history information on traffic volume of connected calls controlled by the whole of the plurality of call control cards.

In the first aspect, the selection unit selects the call control card to be shifted to the cutoff ready state, based on event information that affects the number of connected calls controlled by the plurality of call control cards.

In the first aspect, the selection unit selects the call control card to be shifted to the cutoff ready state, based on the state of a different network apparatus adjacent to the network apparatus (irrespective of whether the apparatuses are geographically or logically adjacent to each other).

A network apparatus of a second aspect having a plurality of call control cards, comprising a power saving control unit configured to cause at least one of the plurality of call control cards to shift to a cutoff ready state in which allocation of a new call is restricted. The power saving control unit causes the call control card in the cutoff ready state to shift to a normal state in which the allocation of the new call is allowed, when the number of connected calls controlled by the whole of the plurality of call control cards exceeds a fifth threshold value.

In the second aspect, the power saving control unit cuts off power supplied to at least one of the plurality of call control cards. The power saving control unit resumes the supply of the power to the call control card for which the power has been cut off, when the number of connected calls controlled by the whole of the plurality of call control cards exceeds a sixth threshold value.

In the second aspect, the plurality of call control cards include an active call control card, and a standby call control card used as an alternative to the active call control card. The power saving control unit cuts off power supplied to the standby call control card. The power saving control unit resumes the supply of the power to the standby call control card for which the power has been cut off, when the number of connected calls controlled by the whole of the plurality of call control cards exceeds a seventh threshold value.

In the second aspect, the plurality of call control cards include a plurality of card sets. Each of the plurality of card sets includes an active call control card, and a standby call control card used as an alternative to the active call control card. The power saving control unit cuts off power supplied to at least one of the plurality of card sets. The power saving control unit resumes the supply of the power to both the active call control card and the standby call control card contained in the card set for which the power has been cut off, when the number of connected calls controlled by the whole of the plurality of call control cards exceeds an eighth threshold value.

In the second aspect, the power saving control unit causes the call control card in the cutoff ready state to shift to the normal state, in response to receipt of disaster information.

A network apparatus of third aspect having a plurality of calls under control of the network apparatus, comprising: a management unit configured to manage the number of connected calls set by each of the plurality of cells, for each of the plurality of cells; and a command unit configured to provide a command to reduce transmission power of a signal transmitted from a cell, in which the number of connected calls is less than a ninth threshold value, of the plurality of cells.

### PRIEF DESCRIPTION OF THE DRAWINGS

Fig. 1 is a diagram showing a mobile communication system 100 according to a first embodiment.
Fig. 2 is a diagram showing a network apparatus 20 according to the first embodiment.
Fig. 3 is a diagram showing a communication card group 21 according to the first embodiment.
Fig. 4 is a diagram showing the network apparatus 20 according to Modification 1.

### DETAILED DESCRIPTION OF THE EMBODIMENTS

Hereinafter, description will be given with reference to the drawings with regard to a mobile communication system according to embodiments of the present invention. Incidentally, in the following disclosure of the drawings, the same or similar parts are designated by the same or similar reference numerals.

However, it is to be noted that the drawings are in schematic form and dimensional ratios or the like is different from actual ones. Therefore, it is to be understood that specific dimensions or the like is determined taking the following description into consideration. Also, of course, it is to be understood that there are differences in relative dimensions or dimensional ratios from one to another of the drawings.

### (Overall of the embodiments)

A network apparatus according to an embodiment has plural call control cards. The network apparatus includes a selection unit configured to select at least one call control card from among the plural call control cards, when the number of connected calls controlled by the whole of the plural call control cards is less than a first threshold value; and a power saving control unit configured to cause the call control card selected by the selection unit to shift to sol cutoff ready state in which allocation of a new call is restricted.

In the embodiment, the power saving control unlit causes the call control card selected by the selection unit to shift to the cutoff ready state in which the allocation of the new call is restricted. The new call is not allocated to the call control card in the cutoff ready state, thus leading merely to a decrease in the number of connected calls controller by the call control card in the cutoff ready state. Thus, an adverse effect involved in disconnection of a connected call can be reduced when power supplied to the call control card in the cutoff ready state is cut off.

The network apparatus according to the embodiment has plural call control cards. The network apparatus includes a power saving control unit configured to cause at least one of the plural call control cards to shift to a cutoff ready state in which allocation of a new call is restricted. The power saving control unit causes the call control card in the cutoff ready state to shift to a normal state in which the allocation of the new call is allowed, when the number of connected calls controlled by the whole of the plural call control cards exceeds a fifth threshold value.

In the embodiment, the power saving control unit causes the call control card in the cutoff ready state to shift to the normal state in which the allocation of the new call is allowed, when there is an increase in the number of connected calls controlled by the whole of the plural call control cards. Thus, a call loss of the new call can be suppressed.

### (FIRST EMBODIMENT)

### (Configuration of the mobile communication system)

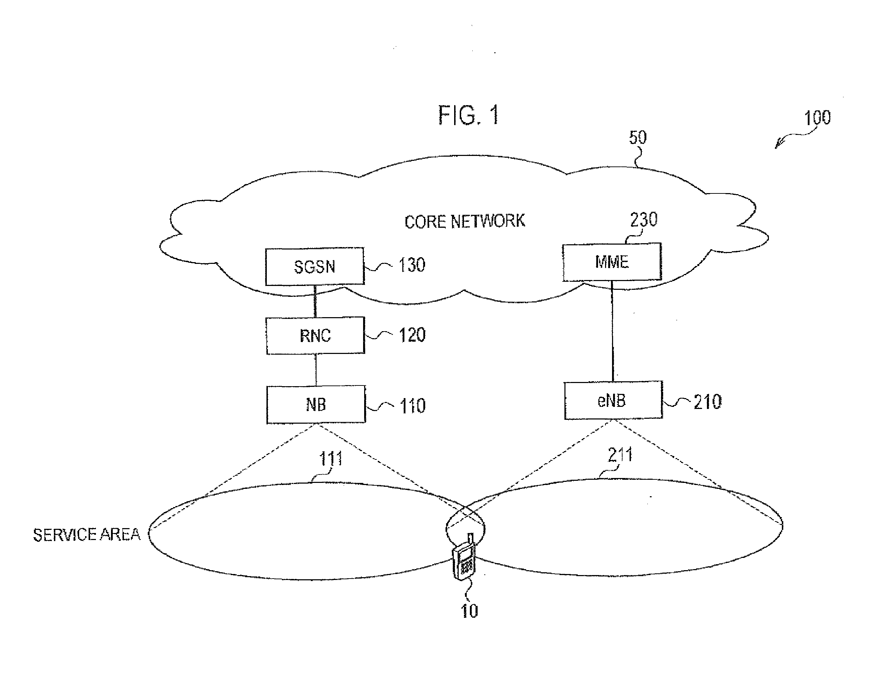

description will be given below with reference to the drawings with regard to the configuration of the mobile communication system according to the first embodiment. Fig. 1 is a diagram showing the mobile communication system 100 according to the first embodiment.

As shown in Fix. 1, the mobile communication system 100 include communication terminal equipment 10 (hereinafter, UE 10), and a core network 50. Also, the mobile communication system 100 includes a first communication system and a second communication system.

The first communication system is, for example, the communication system adapted for UMTS (Universal Mobile Telecommunication System). The first communication system has a base station 110 (hereinafter, NB 110), RNC 120, and SGSN 130. Incidentally, a first RAT (Radio Access Technology) is used in the first communication system.

The second communication system is, for example, the communication system adapted for LTE (Long Term Evolution). The second communication system has, for example, a base station 210 (hereinafter, eNB 210), and MME 230. Incidentally, a second RAT (Radio Access Technology) is used in the second communication system.

The UE 10 is an apparatus (User Equipment) configured to perform communications with the first communication system and the second communication system. For example, the UE 10 has the function of performing radio communication with the NB 110 and also has the function of performing radio communication with the eNB 210.

The NB 110 is an apparatus (NodeB) having a cell 111, which performs radio communication with the UE 10 present in the cell 111.

The RNC 120 is an apparatus (Radio Network Controller) connected to the NIB 110, which establishes a radio connection (RRC Connection) with the USE 10 present in the cell 111.

The SGSN 130 is an apparatus (Serving GPRS Support Node) that performs packet switching in a packet switching domain. The SGSN 130 is provided in the core network 50. Although omitted from Fig. 1, an apparatus (MSC: Mobile Switching Center) that performs circuit switching in a circuit switching domain may be provided in the core network 50.

The eNB 210 is an apparatus (evolved NodeB) having a cell 211, which performs radio communication with the UE 10 present in the cell 211.

The MME 230 is an apparatus (Mobility Management Entity) that manages mobility of the UE 10 that establishes a radio connection with the eNB 210. The MME 230 is provided in the core network 50.

Incidentally, it is to be understood that the cell serves the function of performing radio communication with the UE 10. However, the cell may be considered to be a service area that refers to a cell-communicable range. The cell is identified by frequency, spreading code, time slot, or the like, used in the cell.

### (Configuration of the network apparatus)

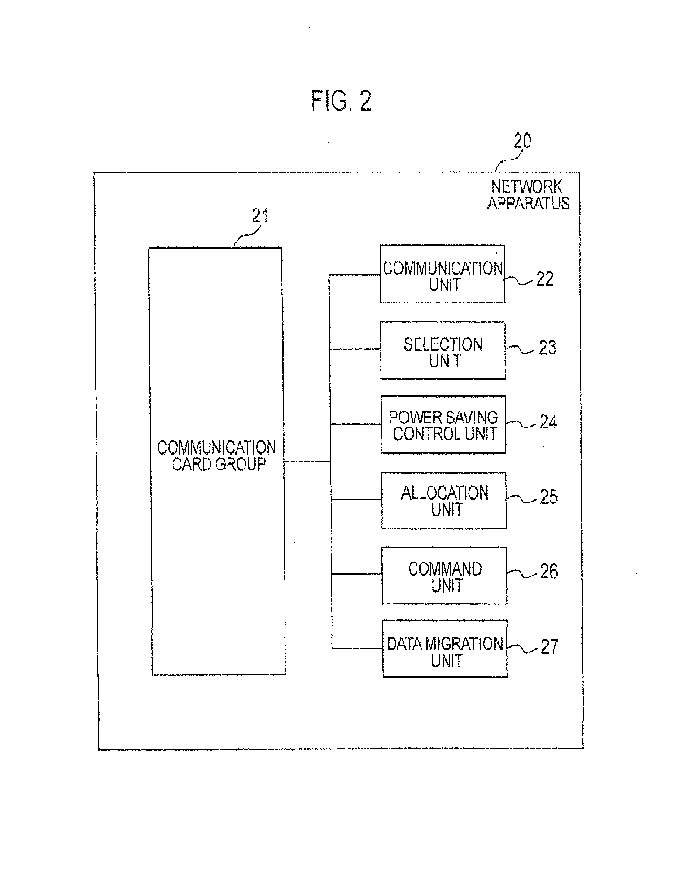

Description will be given below with reference to the drawings with regard to the configuration of the network apparatus according to the first embodiment. Fig. 2 is a diagram showing the network apparatus 20 according to the first embodiment.

The network apparatus 20 may be, for example, the RNC 120 provided in the first communication system. Alternatively, the network apparatus 20 may be, for example, the eNB 210 provided in the second communication system. Alternatively, the network apparatus 20 may be, for example, the MME 230 provided in the second communication system.

As shown in Fig. 2, the network apparatus 20 has a communication card group 21, a communication unit 22, a selection unit 28, a power saving control unit 24, an allocation unit 25, a command unit 26, and a data migration unit 27.

The communication card group 21 includes plural call control cards, such as a card that commands a mobile communication terminal to perform call processing, and a card that terminates a connect signal of a call set for the mobile communication terminal. Also, the communication card group 21 may include a card for communication with a different network apparatus, and a card that controls HSDPA (High Speed Downlink Packet Access), HSUPA (High Speed Uplink Packet Access), or the like.

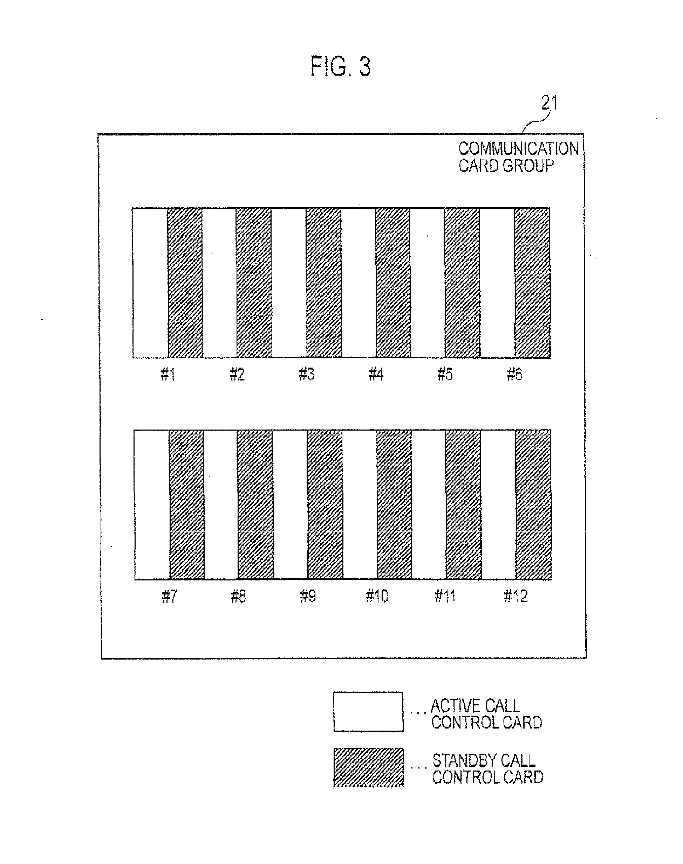

In the first embodiment, the communication card group 21 includes plural card sets (for example, card sets #1 to #12), as shown in Fig. 3. Each card set is formed by a pair of call control cards. One of the pair of call control cards functions as an active call control card, while the other functions as a standby call control card.

The active call control card is the call control card that operates actually. On the other hand, the standby call control card is the call control card used as an alternative to the active call control card.

The communication unit 22 performs communication with the UE 10. Also, the communication unit 22 performs communication with a different network apparatus.

The selection unit 23 selects at least one active call control card from among the plural active call control cards, when the number of connected calls controlled by the whole of the plural call control cards (here, the active call control cards) contained in the communication card group 21 is less than a first threshold value. For example, the selection unit 23 selects the active call control card controlling small number of connected calls from among the plural active call control cards.

The power saving control unit 24 controls mode (hereinafter, power saving mode) in which power savings is made for power supplied to the plural call controls cards contained in the communication card group 21.

### (1) Description will be given below with regard to shift from a normal state to a cutoff ready state.

Specifically, the power saving control unit 24 causes the call control card (here, the active call control card) selected by the selection unit 23 to shift to the cutoff ready state in which allocation of a new call is restricted. In other words, the power saving control unit 24 causes the active call control card selected by the selection unit 23 to shift, to the cutoff ready state, when the number of connected calls controlled by the whole of the plural active call control cards contained in the communication card group 21 is less than the first threshold value.

### (2) Description will be given below with regard to cutoff (power savings) of the power supplied to the active call control cards,

Specifically, the power saving control unit 24 cuts off the power supplied to the active call control card in the cutoff ready stated when the number of connected calls controlled by the active call control card in the cutoff ready state is less than a second threshold value. Alternatively, the power saving control unit 24 cuts off the power supplied to the active call control card in the cutoff ready state, when elapsed time from the shift to the cutoff ready state exceeds a predetermined time.

Incidentally, the second threshold value is, for example, "1," In other words, the power saving control unit 24 cuts off the power supplied to the active call control card in the cutoff ready state, when the number of connected calls controlled by the active call control card in the cutoff ready state becomes "0." However, it is to be understood that the second threshold value is not limited to "1."

Incidentally, it is preferable that the power saving control unit 24 cuts off the power supplied to the standby call control card used as the alternative to the active call control card, as well as the power supplied to the active call control card. In other words, it is preferable that the power saving control unit 24 cuts off also the power supplied to the standby call control card contained in one card set, when cutting off the power supplied to the active call control card contained in the one card set.

### (3) Description will be given below with regard to cutoff (power savings) of the power supplied to the standby call control cards.

Specifically, the power saving control unit 24 cuts off the power supplied to the standby call control card, when the number of connected calls controlled by the whole of the plural call control cards (here, the active call control cards) contained in the communication card group 21 is less than a third threshold value.

Incidentally, the third threshold value may be a smaller value than the first threshold value or may be a larger value than the first threshold value. Alternatively, the third threshold value may be the same value as the first threshold value.

In such cases, the power saving control unit 24 may cut off the power supplied to all of the standby call control cards contained in the communication card group 21. Alternatively, the power saving control unit 24 may cut off the power supplied to some of the standby call control cards contained in the communication card group 21,

### (4) Description will be given below with regard to shift from the cutoff ready state to the normal state.

Specifically, the power saving control unit 24 causes the active call control card in the cutoff ready state to shift to the normal state in which the allocation of the new call is allowed, when the number of connected calls controlled by the whole of the plural call control cards (here, the active call control cards) contained in the communication card group 21 exceeds a fifth threshold value.

Incidentally, it is preferable that the fifth threshold value be a larger value than the first threshold value, in that hysteresis is imparted. However, the fifth threshold value may be the same value as the first threshold value.

### (5) Description will be given below with regard to resumption of the supply of the power to the active call control cards,

Specifically, the power saving control unit 24 resumes the supply of the power to the active call control card for which the power has been cut off, when the number of connected calls controlled by the whole of the plural call control cards (here, the active call control cards) contained in the communication card group 21 exceeds a sixth threshold value.

Incidentally, it is preferable that the sixth threshold value be a larger value than the second threshold value, in that hysteresis is imparted. However, the sixth threshold value may be the same value as the second threshold value.

### (6) Description will be given below with regard to resumption of the supply of the power to the standby call control cards.

Specifically, the power saving control unit 24 resumes the supply of the power to the standby call control card for which the power has been cut off, when the number of connected calls controlled by the whole of the plural call control cards (here, the active call control cards) contained in the communication card group 21 exceeds a seventh threshold value.

Incidentally, it is preferable that the seventh threshold value be a larger value than the third threshold value, in that hysteresis is imparted. However, the seventh threshold value may be the same value as the third threshold value.

The allocation unit 25 allocates a new call to and active call control card of the plural call control cards (here, the active call control cards). Here, the allocation unit 25 allocates the new call so as to provide uneven allocation to the active call control card to which the new call is to be allocated.

For example, the allocation unit 25 allocates the new call in ascending numeric order of numbers assigned to the active call control cards. In other words, the allocation unit 25 allocates the new call to the second-lowest-riumbered active call control card, when the number of connected calls controlled by the lowest-numbered active call control card reaches its upper limit.

Incidentally, it is generally preferable that the allocation of the new call take place so that the plural active call control cards control an equal number of connected calls, in terms of distribution of control load. In contrast, in the first embodiment, the allocation of the new call takes place so as to provide the uneven allocation to the active call control card to which the new call is to be allocated, thereby leading to a small number of connected calls controlled by the active call control card in the cutoff ready state. Thus, an adverse effect involved in disconnection of a connected call can be reduced when the power supplied to the active call control card in the cutoff ready state is cut off.

The command unit 26 provides a command to reduce transmission power of a signal transmitted from the cell relevant to the call control card (here, the active call control card) in the cutoff ready state. For example, if the network apparatus 20 is the RNC 120, the command unit 26 provides the command to reduce the transmission power of the signal transmitted from the cell, to the NB 110 including the cell relevant to the active call control card in the cutoff ready state. Also, if the network apparatus 20 is the eNB 210, the command unit 26, internal to the eNB 210, provides the command to reduce the transmission power of the signal transmitted from the cell having the active call control card in the cutoff ready state.

The data migration unit 27 migrates user data stored in the call control card (here, the active call control card) in the cutoff ready state, to the active call control card not shifted to the cutoff ready state.

### (Advantageous effect)

In the first embodiment, the power saving control unit 24 causes the call control card (here, the active call control card) selected by the selection unit 23 to shift to the cutoff ready state in which the allocation of a new call is restricted. The new call is not allocated to the active call control card in the cutoff ready state, thus leading merely to a decrease in the number of connected calls controlled by the active call control card in the cutoff ready state. Thus, the adverse effect involved in the disconnection of the connected call can be reduced when the power supplied to the active call control card in the cutoff ready state is cut off.

In the first embodiment, the power saving control unit 24 cuts off the power supplied to the active call control card in the cutoff ready state, when there is a decrease in the number of connected calls controlled by the active call control card in the cutoff ready state. Thus, the adverse effect involved in the disconnection of the connected call can be reduced when the power supplied to the active call control cared in the cutoff ready state is cut off.

In the first embodiment, the power saving control unit 24 cuts off the power supplied to the standby call control card, when there is a decrease in the number of connected calls controlled by the whole of the plural call control cards (here, the active call control cards) contained in the communication card group 21. In other words, the power supplied to the standby call control card is cut off when there are a small number of connected calls disconnected due to a failure in the active call control card. Thus, power savings can be achieved while reducing the adverse effect resulting from the failure in the active call control card. Incidentally, it is to be noted that the disconnection of the connected call does not occur unless the failure occurs in the active call controls card.

In the first embodiment, the power saving control unit 34 causes the active call control card in the cutoff ready state to shift to the normal state in which the allocation of the new call is allowed, when there is an increase in the number of connected calls controlled by the whole off the plural call control cards (here, the active call control cards), Thus, a call loss of the new call can be suppressed.

In the first embodiment, the power saving control unit 24 resumes the supply of the power to the active call control card for which the power has been cut off, when there is an increase in the number of connected calls controlled by the whole of the plural call control cards (here, the active call control cards) contained in the communication card group 21. Thus, the call loss of the new call can be suppressed.

In the first embodiment, the power saving control unit 24 resumes the supply of the power to the standby call control card for which the power has been cut off, when there is an increase in the number of connected calls controlled by the whole of the plural call control cards (here, the active call control cards) contained in the communication card group 21. In other words, the supply of the power to the standby call control card is resumed when there are a large number of connected calls disconnected due to the failure in the active call control card. Thus, the disconnection of the connected call due to the failure in the active call control card is suppressed.

In the first embodiment, the allocation unit 25 allocates a new call to any active call control card of the plural call control cards (here, the active call control cards). Thus, the number of connected calls controlled by the active call control card in the cutoff ready state can be reduced.

In the first embodiment, the command unit 26 provides the command to reduce the transmission power of the signal transmitted from the cell relevant to the call control card (here, the active call control card) in the cutoff ready state. Thus, the number of connected calls controlled by the active call control card in the cutoff ready state can be quickly reduced.

In the first embodiment, the data migration unit 27 migrates the user data stored in the call control card (here, the active call control card) in the cutoff ready state, to the active call control card not shifted to the cutoff ready state. Thus, the number of connected calls controlled by the active call control card in the cutoff ready state can be quickly reduced without the disconnection of the connected call.

### (MODIFICATION 1)

Description will be given below with reference to the drawings with regard to Modification 1 of the first embodiment. Hereinafter, description will be given mainly with regard to the points of difference from the first embodiment.

Specifically, in the first embodiment, the network apparatus 20 provides the command to reduce the transmission power of the signal transmitted from the cell relevant to the call control card (here, the active call control card) in the cutoff ready state. In contrast, in Modification 1, the network apparatus 20 provides the command to reduce the transmission power of the signal transmitted from the ,cell, in which the number of connected calls is less than a ninth threshold value, of plural cells provided under the network apparatus 20.

### (Configuration of the network apparatus)

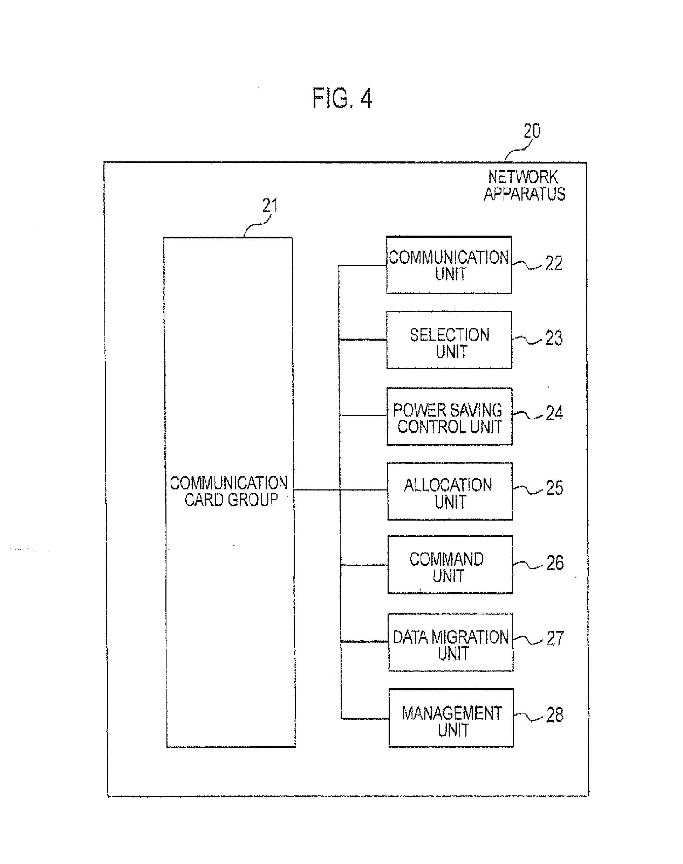

Description will be given below with reference to the drawings with regard to the configuration of the network apparatus according to Modification 1. Fig. 4 is a diagram showing the network apparatus 20 according to Modification 1. Incidentally, in Fig. 4, the same structural components as those in Fig. 2 are designated by the same reference numerals.

The network apparatus 20 may be any apparatus having the plural cells under control of the network apparatus 20. Thus, the network apparatus 20 may be the RNC 120, may be the end 210, or may be the MME 230.

As shown in Fig. 4, the network apparatus 20 has a management unit 28 in audition to the configuration shown in Fig. 2.

The management unit 28 manages the number of connected calls set by each of the plural cells provided under the network apparatus 20, for each of the plural cells.

The above-described, command unit 26 provides the command to reduce the transmission power of the signal transmitted from the cell, in which the number of connected calls is less than the ninth threshold value, of the plural cells provided under the network apparatus 20.

### (MODIFICATION 2)

Description will be given below with regard to Modification 2 of the first embodiment. Hereinafter, description will be given mainly with regard to the points of difference from the first embodiment.

In Modification 2, the above-described selection unit 23 selects the active call control card to be shifted to the cutoff ready state, based on history information on traffic volume of connected calls controlled by the whole of the plural call control cards (here, the active call control cards) contained in the communication card group 21. The history information on the traffic volume is the information indicating a history of moving average of the traffic volume, a history of the traffic volume for each date and time, a history of the traffic volume for each day of the week, or a history of the traffic volume for each time of day.

Specifically, if the history information on the traffic volume within a predetermined time period from the present time exceeds a predetermined threshold value, the selection unit 23 does not select the active call control card to be shifted to the cutoff ready state, even when the number of connected calls controlled by the whole of the plural active call control cards is less than the first threshold value.

Meanwhile, if the history information on the traffic volume within the predetermined time period from the present time is less than the predetermined threshold value, the selection unit 23 selects the active call control card to be shifted to the cutoff ready state, when the number of connected calls controlled by the whole of the plural active call control cards is less than the first threshold value.

Incidentally, the power saving control unit 24 causes the active call control card selected by the selection unit 23 to shift from the normal state to the cutoff ready state.

Also, the power saving control unit 24 may cause the call control card (here, the active call control card) in the cutoff ready state to shift to the normal state, if the history information on the traffic volume within the predetermined time period from the present time exceeds the predetermined threshold value.

According to Modification 2, if the history information on the traffic volume within the predetermined time period from the present time exceeds the predetermined threshold value, the active call control card to be shifted to the cutoff ready state is not selected. Thus, when an increase in traffic is anticipated, a deficient number of active call control cards in the normal state can be suppressed,

### (MODIFICATION 3)

Description will be given below with regard to Modification 3 of the first embodiment. Hereinafter, description will be given mainly with regard to the points of difference from the first embodiment.

In Modification 3, the above-described selection unit 23 selects the active call control card to be shifted to the cutoff ready state, based on event information that affects the number of connected calls controlled by the whole of the plural call control cards (here, "plural") contained in the communication card group 21, The event information is the information indicating the date and time of an event (for example, New Year's Day or a concert) that may cause a steep increase in the number of connected calls. The event information is, for example, externally entered,

Specifically, if the date and time indicated by the event information is present within a predetermined time period from the present date and time. the selection unit 23 does not select the active call control card to be shifted to the cutoff ready state, even when the number of connected calls controlled by the whole of the plural active call control cards is less than the first threshold value.

Meanwhile, if the date and time indicated by the event information is not present within the predetermined time period from the present date and time, the selection unit 23 selects the active call control card to be shifted to the cutoff ready state, when the number of connected calls controlled by the whole of the plural active call control cards is less than the first threshold value.

For example, when selecting the active call control card to be shifted to the cutoff ready state, the selection unit 28 selects the active call control card controlling small number of connected calls from among the plural active call control cards.

Incidentally, the power saving control unit 24 causes the active call control card selected by the selection unit 23 to shift from the normal state to the cutoff ready state.

Also, the power saving control unit 24 may cause the call control card (here, the active call control card) in the cutoff ready state to shift to the normal state, if the date and time indicated by the event information is present within the predetermined time period from the present date and time.

According to Modification 3, if the date and time indicated by the event information is present within the predetermined time period from the present date and time, the active call control card to be shifted to the cutoff ready state is not selected. Thus, when an increase in the number of connected calls of the network apparatus 20 involved in an event such as New Year's Day or a concert is anticipated, a deficient number of active call control cards in the normal state can be suppressed.

### (MODIFICATION 4)

Description will be given below with regard to Modification 4 of the first embodiment. Hereinafter, description will be given mainly with regard to the points of difference from the first embodiment.

In Modification 4, the above described selection unit 23 selects the call control card to be shifted to the cutoff ready state, based on the state of a different network apparatus adjacent to the network apparatus 20 (irrespective of whether the apparatuses are geographically or logically adjacent to each other). Incidentally, the different network apparatus is an apparatus that manages an area adjacent to an area managed by the network apparatus 20,

Specifically, if a failure occurs in the different network apparatus adjacent to the network apparatus 20 (irrespective of whether the apparatuses are geographically or logically adjacent to each other), the selection unit 23 does not select the active call control card to be shifted to the cutoff ready state, even when the number of connected calls controlled by the whole of the plural active call control cards is less than the first threshold value.

Meanwhile, if the failure does not occur in the different network apparatus adjacent to the network apparatus 20 (irrespective of whether the apparatuses are geographically or logically adjacent to each other), the selection unit 23 selects the active call control card to be shifted to the cutoff ready state, when the number of connected calls controlled by the whole of the plural active call control cards is less than the first threshold value.

Incidentally, the power saving control unit 24 causes the active call control card selected by the selection unit 23 to shift from the normal state to the cutoff ready state.

Also, the power saving control unit 24 may cause the call control card (here, the active call control card) in the cutoff ready state to shift to the normal state, if the failure occurs in the different network apparatus adjacent to the network apparatus 20 (irrespective of whether the apparatuses are geographically or logically adjacent to each other).

According to Modification 4, if the failure occurs in the different network apparatus adjacent to the network apparatus 20 (irrespective of whether the apparatuses are geographically or logically adjacent to each other), the active call control card to be shifted to the cutoff ready state is not selected. Thus, when an increase in the number of connected calls of the network apparatus 20 involved in the failure in the different network apparatus is anticipated, a deficient number of active call control cards in the normal state can be suppressed.

### (MODIFICATION 5)

Description will be given below with regard to Modification 5 of the first embodiment. Hereinafter, description will be given mainly with regard to the points of difference from the first embodiment.

In Modification 5, the above-described power saving control unit 24 causes the call control card (here, the active call control card) in the cutoff ready state to shift to the normal state, in response to receipt of disaster information. The disaster information is received from an upper network apparatus relative to the network apparatus 20, and is transmitted to a mobile station or a lower network apparatus relative to the network apparatus 20 (hereinafter, the mobile station or the like). The disaster information is, for example, earthqnake, tsunami or other disaster information (e.g. ETWS (Earthquake Tsunami Warning System) information).

According to Modification 5, the cutoff ready state can be released in response to the receipt of the disaster information thereby to suppress a situation where the disaster information cannot be transmitted to the mobile station or the like due to a deficient number of active call control cards in the normal state.

### (OTHER EMBODIMENTS)

While the present invention has been described by the above-mentioned embodiments, it is to be understood that the description and drawings that form part of this disclosure are not intended to limit the invention. Various alternative embodiment, examples and applicable technologies will be apparent to those skilled in the art from the disclosure.

It is to be understood that the first communication, system and the second communication system are not limited to the communication systems adapted for UMTS or LTE but may be other communication systems (for example, a communication system adapted for WiMAX).

The power saving control unit 24 may cut off power supplied to both the active call control card and the standby call control card contained in a card set, in which the number of connected calls is less than a fourth threshold value, of the plural card sets. Also, the power saving control unit 24 may resume the supply of the power to both the active call control card and the standby call control card contained in the card set for which the power has been cut off, when the number of connected calls controlled by the whole of the plural call control cards exceeds an eighth threshold value.

It should be noted that the operations of the network apparatus 20 may be implemented by hardware, a software module executed by a processor, or a combination thereof.

The software module may be provided in a storage medium in any form, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The above described storage medium is connected to the processor so that the processor can read and write information from and in the storage medium. Also, the above-described storage medium may be integrated with the processor. Moreover, the above-described storage medium and the processor may be provided in an ASIC. The ASPIC may be provided in the network apparatus 20. In addition, the storage medium and the processor may be provided, in each of the network apparatus 20 as a discrete component.

## Claims

1. A network apparatus having a plurality of call control cards, comprising:
a selection unit configured to select at least one call control card from among the plurality of call control cards, when the number of connected calls controlled by the whole of the plurality of call control cards is less than a first threshold value and
a power saving control unit configured to cause the call control card selected by the selection unit to shift to a cutoff ready state in which allocation of a new call is restricted.

2. The network apparatus according to claim 1, wherein
the power saving control unit cuts off power supplied to the call control card in the cutoff ready state, when the number of connected calls controlled by the call control card in the cutoff ready state is less than a second threshold value, or when elapsed time from the shift to the cutoff ready state exceeds a predetermined time.

3. The network apparatus according to claim 1, wherein
the plurality of call control cards include an active call control card, and a standby call control card used as an alternative to the active call control card, and
the power saving control unit cuts off power supplied to the standby call control card, when the number of connected calls controlled by the whole of the plurality of call control cards is less than a third threshold value.

4. The network apparatus according to claim 1, wherein
the plurality of call control cards include a plurality of card sets, each of the plurality of card sets includes an active call control card, and a standby call control card used as an alternative to the active call control card, and
the power saving control unit cuts off power supplied to both the active call control card and the standby call control card contained in card set, in which the number of connected calls is less than a fourth threshold value, of the plurality of card sets.

5. The network apparatus according to claim 1, further comprising an allocation unit configured to allocate a new call to any one of the plurality of call control cards,
wherein the allocation unit allocates the new call so as to provide uneven allocation to the call control card to which the new call is to be allocated.

6. The network apparatus according to claim 1, wherein
the selection unit selects the call control card controlling small number of connected calls from among the plurality of call control cards.

7. The network apparatus According to claim 1, further comprising a data migration unit configured to migrate user data stored in the call control card in the cutoff ready state, to the call control card not shifted to the cutoff ready state.

8. The network apparatus according to claim 1, further comprising a command unit configured to provide a command to reduce transmission power of a signal transmitted from a cell having the call control card in the cutoff ready state.

9. The network apparatus according to claim 1, wherein
the selection unit selects the call control card to be shifted to the cutoff ready state, based on history information on traffic volume of connected calls controlled by the whole of the plurality of call control cards,

10. The network apparatus according to claim 1, wherein
the selection unit selects the call control card to be shifted to the cutoff ready state, based on event information that affects the number of connected calls controlled by the plurality of call control cards.

11. The network apparatus according to claim. 1, wherein
the selection unit selects the call control card to be shifted to the cutoff ready state, based on the state of a different network apparatus adjacent to the network apparatus (irrespective of whether the apparatuses are geographically or logically adjacent to each other).

12. A network apparatus having a plurality of call control cards, comprising a power saving control unit configured to cause at least one of the plurality of call control cards to shift to a cutoff ready state in which allocation of a new call is restricted,
wherein the power saving control unit causes the can control card in the cutoff ready state to shift to a normal state in which the allocate of the new call is allowed, when the number of connected calls controller by the whole of the plurality of call control cards exceeds a fifth threshold value.

13. The network apparatus according to claim. 12, wherein
the power saving control unit cuts off power supplied to at least one of the plurality of call control cards, and
the power saving control unit resumes the supply of the power to the call control card for which the power has been cut off, when the number of connected calls controlled by the whole of the plurality of call control cards exceeds a sixth threshold value.

14. The network apparatus according to claim 12, wherein
the plurality of call control cards includes an active call control card, and a standby call control card used as an alternative to the active call control card,
the power saving control unit cute off power supplied to the standby call control card, and
the power saving control unit resumes the supply of the power to the standby call control card for which the power has been cut off, when the number of connected calls controlled by the whole of the plurality of call control cards exceeds a seventh threshold value.

15. The network apparatus according to claim 12, wherein
the plurality of call control cards include a plurality of card sets, each of the plurality of card sets includes an active call control card, and a standby call control card used as an alternative to the active call control card,
the power saving control unit cuts off power supplied to at least one of the plurality of card sets, and
the power saving control unit resumes the supply of the power to both the active call control card and the standby call control card contained in the card set for which the power has been cut off, when the number of connected calls controlled by the whole of the plurality of call control cards exceeds an eighth threshold value.

16. The network apparatus according to claim 12, wherein
the power saving control unit causes the call control card in the cutoff ready state to shift to the normal state, in response to receipt of disaster information.

17. A network apparatus having a plurality of cells under control of the network apparatus, comprising
a management unit configured to manage the number of connected calls set by each of the plurality of cells, for each of the plurality of cells; and
a command unit configured to provide a command to reduce transmission power of a signal transmitted from a cell, in which the number of connected calls is less than a ninth threshold value, of the plurality of cells.
